# EUROPÄISCHE PATENTSCHRIFT

(11) **EP 2 183 067 B1**
(45) Veröffentlichungstag und Bekanntmachung des Hinweises auf die Patenterteilung: **09.09.2015**
(21) Anmeldenummer: 08774831.5
(22) Anmeldetag: 07.07.2008
(51) Int. Cl.: B22F 3/10, C04B 35/111, C04B 35/486, C04B 35/56, C04B 35/565, C04B 35/634, B22F 3/22, C04B 35/584, B22F 1/00, F27D 1/00

(54) **FORMMASSE UND VERFAHREN ZUR HERSTELLUNG EINER FORMMASSE**
MOLDING COMPOUND AND METHOD FOR PRODUCING A MOLDING COMPOUND
MATIÈRE À MOULER ET PROCÉDÉ DE FABRICATION D'UNE MATIÈRE À MOULER

(30) Priorität: 20.08.2007 DE 102007039246
(43) Veröffentlichungstag der Anmeldung: 12.05.2010
(73) Patentinhaber: Robert Bosch GmbH, 70442 Stuttgart (DE)
(72) Erfinder: GRATH, Eberhard, 87509 Immenstadt (DE); AICHELE, Wilfried, 71364 Winnenden (DE); NOWAK, Joost, 72555 Metzingen (DE); ARNOLD, Josef, 87509 Immenstadt (DE); CZERWINSKI, Klaus, 71229 Leonberg (DE); WEISSER, Eva, 71334 Waiblingen (DE)
(86) Internationale Anmeldenummer: PCT/EP2008/058776
(87) Internationale Veröffentlichungsnummer: WO 2009/024398

(56) Entgegenhaltungen:
- EP-A- 0 115 104
- EP-A- 0 688 766
- DE-A- 19 925 197
- US-A- 5 266 264

## Beschreibung

### Stand der Technik

Die Erfindung geht aus von einer Formmasse zur Herstellung von Formkörpern mittels eines Pulverspritzgießverfahrens gemäß dem Oberbegriff des Anspruchs 1. Weiterhin betrifft die Erfindung ein Verfahren zur Herstellung einer Formmasse für ein Pulverspritzgießverfahren, enthaltend mindestens ein anorganisches Pulver, mindestens ein polar modifiziertes Polyolefin sowie mindestens ein gegebenenfalls polares Wachs als organische Komponenten.

Bei Pulverspritzgießverfahren wird in Abhängigkeit vom eingesetzten anorganischen Pulver in Metallpulverspritzgießverfahren und Keramikpulverspritzgießverfahren unterschieden. Bei ersteren wird ein Metall als anorganisches Pulver eingesetzt, bei letzteren eine Keramik.

Ein Bindersystem, das für Formmassen eingesetzt wird, die mittels Metallpulverspritzgießverfahren verarbeitet werden, ist zum Beispiel aus DE-C 40 33 952 bekannt. Neben einem Polymer enthält das Bindersystem eine niedermolekulare Komponente. Als geeignete niedermolekulare Komponenten werden Cyklododecan, Cyclododecanon, Cyclododecanol oder Stearylalkohol genannt. Das eingesetzte Polymer ist zum Beispiel ein relativ niedrigviskoses modifiziertes Polypropylen, zum Beispiel Polypropylen, das unter Luft oxidiert und in einer Nebenreaktion oxidativ abgebaut ist.

Die leichtflüchtige Komponente bildet zusammen mit dem Polypropylen eine gemeinsame feste Lösung und wirkt so als Weichmacher. Aufgrund der leichtflüchtigen Komponente lässt sich die Formmasse jedoch nicht zum Beispiel mit einem kontinuierlichen Verfahren zu einem Granulat vorkonfektionieren, da beim Abkühlen ein Teil der leichtflüchtigen Komponente verdunstet und sich auf diese Weise die Zusammensetzung des Bindersystems unkontrolliert verändert. Ein weiterer Nachteil des Bindersystems, wie es in DE-C 40 33 952 beschrieben ist, ist, dass eine ausreichend hohe Verarbeitungsviskosität nur dann erzielt wird, wenn der Anteil an Polypropylen im Bindersystem mindestens 60 Gew.-% beträgt.

Aus DE-C 196 48 926 ist es bekannt, einen offenporigen Formkörper durch ein Pulverspritzgießverfahren herzustellen. Die hierbei eingesetzte Formmasse enthält neben metallischen oder keramischen Teilchen ein Polyamid sowie weiterhin Weichmacher bzw. Wachse, die mit Hilfe eines Lösungsmittels nach Formgebung des Formteils herausgelöst werden können. Nachteil des hier eingesetzten Polyamids ist jedoch, dass bei der Pyrolyse, die durchgeführt wird, um das Polyamid aus dem Formkörper zu entfernen, ein hoher Anteil an Pyrolysekohlenstoff in den Poren des Formkörpers verbleibt. Dieser verändert beim Sintern die Legierungszusammensetzung und das Gefüge, insbesondere an den Korngrenzen.

In der EP 0115104 A ist eine Formmasse aus einer Mischung aus einem sinterbaren anorganischen Pulver und einem Bindemittel offenbart, welches ein formbares sauerstoffhaltiges Wachs sowie Polypropylen enthalten kann.

In der US 5266264 A ist ein Verfahren zur Herstellung von Sintergut beschrieben, beispielsweise mittels eines Pulverspritzgießverfahrens, wobei das Sintergut ein pulverförmiges Material und ein Bindemittel umfasst, wobei der Binder mindestens ein Wachs sowie Polypropylen enthält.

In der DE 19925197 sind spritzgießfähige Metallpulverzusammensetzungen offenbart, welche ein Metallpulver und ein organisches Bindemittel aufweisen, wobei das organische Bindemittel Polypropylen und weitere organische Harzverbindungen offenbart.

In der EP 0688746 A ist ein Verfahren zur Herstellung eines Formkörpers mit Hilfe einer Formmasse, welche Metall- oder Keramikpulverpartikel umfasst sowie ein Bindersystem offenbart. Die Herstellung kann mittels eines Pulverspritzgießverfahrens erfolgen. Das Bindersystem umfasst eine wasserlösliche feste organische Substanz mit polaren Gruppen, eine wasserunlösliche Substanz mit polaren Gruppen sowie ein wasserunlösliches Polymer.

### Offenbarung der Erfindung

### Vorteile der Erfindung

Eine erfindungsgemäße Formmasse zur Herstellung von Formkörpern mittels eines Pulverspritzgießverfahrens enthält mindestens ein anorganisches Pulver sowie mindestens ein polar modifiziertes Polyolefin als organische Komponente. Weiterhin enthält die Formmasse mindestens ein gegebenenfalls polares Wachs als weitere organische Komponente.

Durch die Verwendung von Wachsen in der Formmasse lässt sich diese zum Beispiel auch extrudieren und granulieren, wobei das Abkühlen des extrudierten Schmelzestranges unter Umgebungsbedingungen erfolgt. Im Gegensatz zu den aus dem Stand der Technik bekannten niedermolekularen Komponenten, die bei Raumtemperatur feste Lösungsmittel darstellen und die bei erhöhter Temperatur leichtflüchtig sind, verdunsten die Wachse während des Abkühlens unter Umgebungsbedingungen nicht. Die Zusammensetzung der Formmasse ändert sich somit nicht. Zudem führen Wachse im Vergleich zu Cyclododecan, Cyclododecanol oder Stearylalkohol, die gemäß den aus dem Stand der Technik bekannten Formmassen als niedermolekulare Komponente eingesetzt werden, zu einer höheren Viskosität bei Verarbeitungstemperatur der Formmasse. Durch die höhere Viskosität der Wachse ist es möglich, der Formmasse einen geringeren Anteil an Polyolefinen zuzugeben. So lässt sich zum Beispiel ein Verhältnis von einem Drittel Polyolefin zu zwei Drittel Wachs im Bindersystem einstellen. Bei einem Mischungsverhältnis in diesem Bereich wird bei der Herstellung von Formkörpern nach der Entfernung des Waches ein

Formkörper aus einem Metall- oder Keramikpulver und Polyolefin mit offener Porenstruktur erhalten, bei dem die thermische Entfernung des restlichen Bindemittels, d. h. die Pyrolyse des Polyolefins, schneller durchgeführt werden kann als bei Formkörpern mit geschlossener Porenstruktur. Dies ist möglich, da der Anteil an Polyolefin kleiner ist als bei den aus dem Stand der Technik bekannten Formmassen. Aufgrund des größeren Polyolefin-Anteils bei den aus dem Stand der Technik bekannten Formmassen ist bei diesen die erforderliche Pyrolysezeit zur Entfernung des Polyolefins größer.

Die erfindungsgemäße Formmasse auch mindestens ein polar modifiziertes Polyolefin und ein unpolares Wachs oder ein polar modifiziertes Polyolefin und ein polares Wachs enthalten. Weiterhin ist es auch möglich, dass die Formmasse zum Beispiel mindestens ein unmodifiziertes Polyolefin sowie mindestens ein polar modifiziertes Polyolefin und ein unpolares Wachs enthält.

Durch die Verwendung von polar modifizierten Polyolefinen oder polaren Wachsen ist es möglich, in der Formmasse auf zusätzliche Dispergiermittel wie Fettsäuren zu verzichten. Die aus dem Stand der Technik bekannten niedermolekularen Dispergiermittel haften im Allgemeinen gut auf den Oberflächen des anorganischen Pulvers, stellen jedoch zum Polyolefin hin ein Trennmittel dar. Vorteil der Verwendung von polar modifizierten Polyolefinen ist es, dass das anorganische Pulver in der Schmelze in Dispersion gehalten wird, ohne dass Dispergiermittel zugesetzt werden müssen, da das Polymer selbst als Dispergator wirkt. Durch den Verzicht auf Dispergiermittel wird die Sprödigkeit der durch Pulverspritzguss hergestellten Formteile verringert.

Geeignete hochmolekulare Wachse, die für die Formmasse verwendet werden können, sind zum Beispiel oxidierte Polyethylen-Wachse oder mit Maleinsäureanhydrid gepfropfte Polyethylen- oder Polypropylen-Wachse als polare Wachse. Als unpolare Wachse können zum Beispiel Paraffin-Wachse, Polyethylen- und Polypropylenwachse eingesetzt werden.

Der Anteil an Wachs im Bindersystem liegt vorzugsweise im Bereich von 40 bis 90 Gew.-%. Durch das Wachs im Bindersystem lässt sich die Viskosität der Formmasse bei der Verarbeitung einstellen. Da Wachse im Allgemeinen eine höhere Viskosität aufweisen als organische bei Raumtemperatur feste Lösungsmittel, wie sie bei Formmassen gemäß dem Stand der Technik eingesetzt worden sind, ist es möglich, den Anteil an Polyolefin in der Formmasse im Vergleich zu den aus dem Stand der Technik bekannten Formmassen zu reduzieren. Da die Wachse im Allgemeinen durch eine Temperaturbehandlung oder häufiger durch Einsatz von Lösungsmitteln aus einem durch Pulverspritzgießverfahren hergestellten Formteil entfernt werden können, bevor das Polyolefin durch ein Pyrolyseverfahren entfernt wird, ist der Anteil der durch Pyrolyse zu entfernenden organischen Komponenten aufgrund des geringeren Polyolefin-Anteils niedriger. Die Pyrolysezeit kann somit reduziert werden, insbesondere, wenn der Polyolefin-Anteil derart gering ist, dass der Formkörper nach dem Entfernen des Wachses offenporig ist. Das für die Formmasse verwendete polar modifizierte Polyolefin ist ein polar modifiziertes Polypropylen. Das Polypropylen kann als Homopolymer oder als Copolymer, bevorzugt als Propylen-Ethylen-Copolymer, vorliegen, wobei das Homopolymer oder Copolymer gegebenenfalls durch Oxidation oder Pfropfen polar modifiziert wird. Der Vorteil der Verwendung von Polypropylen ist, dass dieses insbesondere im Vergleich zu Polyamiden mit einer sehr viel größeren Anzahl an Wachsen eine feste Lösung, ein so genanntes Glas, bildet. Zudem können Wechselwirkungen mit dem anorganischen Pulver über die Art des polar modifizierten Polyolefins, zum Beispiel gepfropft oder oxidiert, oder durch Kombination von polar modifizierten und unmodifizierten Polyolefinen maßgeschneidert werden. Ein weiterer Vorteil von Polypropylen ist, dass dieses einen geringen Rückstand an Kohlenstoffen bei der Pyrolyse unter Schutzgas hinterlässt.

Das polar modifizierte Polypropylen ist zum Beispiel mit Maleinsäureanhydrid oder (Meth)acrylsäure gepfropftes Polypropylen. Weiterhin ist es auch möglich, dass das polar modifizierte Polypropylen ein oxidiertes und dabei oxidativ abgebautes Polypropylen ist.

Das oxidierte Polypropylen wird zum Beispiel durch Mastifizieren eines handelsüblichen Polypropylentyps hergestellt. Durch die Variation des Abbaugrades kann das Polypropylen und damit das Bindersystem leicht für ein anorganisches Pulver unterschiedlicher Teilchengrößen sowie für unterschiedliche Formteile, die aus der Formmasse hergestellt werden sollen, angepasst werden. Die Oxidation bzw. der oxidative Abbau erfolgt in Gegenwart von Umgebungsluft. Beide Reaktionen führen dazu, dass die oxidativ abgebauten Polypropylene polare Gruppen enthalten.

Wie bereits oben erwähnt ist es ein Vorteil der polar modifizierten Polypropylene, dass diese die im Allgemeinen mit einer Oxidhaut überzogenen metallischen Pulver besser benetzen als unmodifizierte Polypropylene mit gleichem Fließindex. Aus diesem Grund kann auf den Zusatz von niedermolekularen Benetzungshilfsmitteln verzichtet werden. Auch polare Wachse führen zu einer verbesserten Benutzung der metallischen Pulver.

Das mindestens eine anorganische Pulver, das in der Formmasse enthalten ist, ist im Allgemeinen ein Keramikpulver oder ein Metallpulver.

Geeignete Keramiken, die zur Herstellung der Formmasse verwendet werden können, sind zum Beispiel Aluminiumoxid, Zirkondioxid, Siliciumcarbid, Siliciumnitrid oder Wolframcarbid.

Metalle, die als Metallpulver in Formmassen zur Herstellung von Formkörpern mittels eines Pulverspritzgießverfahrens eingesetzt werden, sind zum Beispiel Reineisen, Eisen-Nickel-Legierungen, Eisen-Kobalt-Legierungen, rostfreie Stähle (Chromstähle) wie X65Cr13, Chrom-Nickel-Stähle und weichmagnetische Stähle.

Die erfindungsgemäße Formmasse enthält üblicherweise einen Anteil an anorganischem Pulver im Bereich von 50 bis 70 Vol.-%. Der Anteil an unpolaren und polar modifizierten Polyolefinen liegt im Allgemeinen in der Summe im Bereich von 10 bis 60 Gew.-% und der Anteil an Wachs im Bereich von 40 bis 90 Gew.-% bezogen auf den Gesamtbinderanteil. Die Anteile an anorganischem Pulver, polar modifiziertem Polyolefin und Wachs sind dabei abhängig vom gewünschten Einsatz der Formmasse. Weiterhin sind die Anteile abhängig vom eingesetzten anorganischen Pulver, vom eingesetzten polar modifizierten Polyolefin und vom eingesetzten Wachs.

Die Erfindung betrifft weiterhin ein Verfahren zur Herstellung der Formmasse.

Ein erfindungsgemäßes Verfahren zur Herstellung einer Formmasse für ein Pulverspritzgießverfahren, enthaltend mindestens ein anorganisches Pulver sowie ein Bindersystem, das mindestens ein polar modifiziertes Polyolefin sowie mindestens ein Wachs enthält, wird in Anspruch 7 beschrieben.

Das Schmelzen und Homogenisieren in Schritt (a) wird vorzugsweise in einem kontinuierlichen Zweischneckenkneter oder einem offenen Scherwalzenkneter durchgeführt. Durch den Einsatz des Wachses und den dadurch möglichen Verzicht auf das bei Raumtemperatur feste organische Lösungsmittel im Bindersystem ist es möglich, das Schmelzen und Homogenisieren und Abkühlen in offener Atmosphäre durchzuführen. Da der Siedepunkt von Wachsen im Vergleich zu organischen flüssigen Lösungsmitteln hoch ist, verdunsten bzw. verdampfen diese nicht aus der Schmelze an offener Atmosphäre.

In dem kontinuierlichen Zweischneckenkneter oder dem offenen Scherwalzenkneter erfolgt eine intensive Durchmischung des anorganischen Pulvers, des mindestens einen polar modifizierten Polyolefins und des mindestens einen gegebenenfalls polaren Wachses. Diese intensive Durchmischung führt zu einer Homogenisierung der Mischung. Auf diese Weise wird das anorganische Pulver gleichmäßig in der Schmelze aus dem mindestens einen Wachs und dem mindestens einen Polyolefin verteilt.

Üblicherweise wird durch das erfindungsgemäße Verfahren ein Zwischenprodukt, im Allgemeinen ein Granulat, hergestellt. Dies erfolgt beim Formen der Schmelze in Schritt (b). Neben der Herstellung eines Granulates ist es jedoch auch möglich, dass die Formmasse in Schritt (b) direkt zum herzustellenden Formteil geformt wird. Bevorzugt ist jedoch die Produktion eines Granulates, das in einem später folgenden Pulverspritzgießprozess zu einem Formteil geformt werden kann. Zur Herstellung des Granulates wird die geschmolzene Formmasse am Ausgang eines Compounders durch eine Lochplatte extrudiert. Die Schmelzestränge werden entweder direkt an der Lochplatte abgeschnitten (Heißabschlag) oder auf einem Band bis zur Erstarrung abgekühlt und am Ende der Kühlstrecke gebrochen (granuliert).

Zur Herstellung eines Granulates wird üblicherweise als Compounder der kontinuierliche Zweischneckenkneter eingesetzt. Die Formmasse verlässt diesen im Allgemeinen in Form eines extrudierten Stranges, der auf einem Transportband in einem Luftstrom abkühlt. Durch den Einsatz von Wachsen und Polyolefinen sind in der Formmasse keine Bestandteile enthalten, die verdunsten können. Aus diesem Grund ändert sich die Zusammensetzung der Formmasse beim Abkühlen in Gegenwart der Umgebungsluft nicht

In einer Ausführungsform des erfindungsgemäßen Verfahrens wird in einem ersten Schritt das Polyolefin in einem offenen Scherwalzenkneter oxidiert bzw. oxidativ zu einem polar modifizierten Polyolefin abgebaut. Vorteilhaft bei der Verwendung eines offenen Scherwalzenkneters ist es, wenn die Dosierung des Polyolefins auf die Scherwalzen als Schmelzestrang aus einem Extruder oder einer Schmelzepumpe erfolgt Dies hat den Vorteil, dass im Gegensatz zur üblichen Dosierung als Granulat der Ort der Aufbringung des Schmelzestrangs besser definiert ist. Hierdurch wird auch das Verweilzeit-Spektrum auf dem Scherwalzenkneter wesentlich enger. Durch die Aufgabe des Polyolefins als Schmelze entfällt zudem das Aufschmelzen des Granulats auf den heißen Walzen des Scherwalzenkneters. Dies führt zu einer längeren Oxidationszeit bei gleicher Durchsatzleistung.

Die erfindungsgemäße Formmasse eignet sich insbesondere zur Herstellung von pulverspritzgegossenen Formteilen. Hierzu wird die Formmasse in einer Spritzgussmaschine aufgeschmolzen und in ein Werkzeug zur Herstellung des Formteils eingespritzt Im Werkzeug erstarrt die Formmasse.

Nach dem Spritzgießen des Formteiles wird zunächst das Bindersystem entfernt. Hierzu wird zunächst das mindestens eine Wachs aus dem Formteil entfernt. Dies erfolgt zum Beispiel durch eine Lösungsmittelextraktion. Hierbei wird das mindestens eine Wachs aus dem Formteil herausgelöst.

In einem weiteren Schritt werden üblicherweise die nicht gelösten Binderbestandteile durch Pyrolyse entfernt. Die Reste des Bindersystems sind dabei im Allgemeinen die noch im Formteil enthaltenen unlöslichen Polyolefine. Beim Pulverspritzgießverfahren mit einer Formmasse mit einem metallischen Pulver wird die Pyrolyse vorzugsweise in inerter oder reduzierender Atmosphäre durchgeführt, um eine Oxidation der Oberfläche des metallischen Pulvers zu vermeiden. Beim Pulverspritzgießverfahren mit einer Formmasse mit keramischem Pulver erfolgt die Pyrolyse jedoch im Allgemeinen in Gegenwart von Luft. Aus diesem Grund erfolgt neben der Pyrolyse gleichzeitig auch eine Oxidation.

Nach dem Entfernen des Bindersystems wird das noch verbliebene Pulvergerüst aus dem metallischen oder keramischen Pulver zu einem metallischen oder keramischen Bauteil gesintert. Falls beim Sintern unter Atmosphärendruck Poren im Gefüge in unzulässiger Größe oder Anzahl entstehen, so können diese entweder durch ein Sintern unter erhöhtem Druck (Drucksintern) oder durch nachträgliches heißisostatisches Pressen wesentlich verringert werden.

Formteile, die aus der erfindungsgemäßen Formmasse hergestellt werden, sind zum Beispiel metallische Ventilsitze und Ventilkörper oder Magnetkreiskomponenten, die in Mengensteuerventilen eingesetzt werden. Keramische Bauteile, die mit der erfindungsgemäßen Formmasse hergestellt werden können, sind zum Beispiel Strömungspumpen-Laufräder.

### Beispiele

### Beispiel 1

Aus einer Formmasse, die 94 Gew.-% 316L-Stahlpulver, 3 Gew.-% eines Propylen-Ethylen-Copolymers mit 3 Gew.-% Ethylenanteil (PPR3260 der Total GmbH) und 3 Gew.-% eines mit Maleinsäureanhydrid gepfropften Polypropylen-Wachses (Licocene PPMA 1332TP der Clariant AG) enthält, wird ein Formteil geformt. Anschließend wird das Wachs aus dem Formteil entfernt. Hierzu wird dieses 500 Minuten in Hexan in einem Soxhlet in der Nähe der Siedetemperatur von Hexan behandelt. Nach dem Entfernen des Wachses wird das Polyolefin durch Pyrolyse unter Stickstoffatmosphäre aus dem Formteil entfernt. Hierzu wird das Formteil zunächst mit einer Rate von 5°C pro Minute auf 370°C erwärmt. Anschließend wird die Temperatur 30 Minuten bei 370°C gehalten. Im Anschluss daran erfolgt eine weitere Erwärmung mit einer Temperaturanstiegsrate von 2°C pro Minute auf 450°C und ein erneutes Halten bei 450°C für 30 Minuten. Im Anschluss daran beginnt ein Sinterprozess, um das Metallpulver zum metallischen Formteil zu sintern.

Weitere Ausführungsformen des erfindungsgemäßen Verfahrens sind in den Patentansprüchen beschrieben.

Die folgenden Beispiele 2 und 3 sind zum besseren Verständnis der Erfindung aufgeführt.

### Beispiel 2

Es wird eine Formmasse aus 94 Gew.-% 316L-Stahlpulver, 3 Gew.-% eines Propylen-Ethylen-Copolymers mit 3 Gew.-% Ethylenanteil (PPR 3260 der Total GmbH), das vor Zumischung in die Formmasse oxidiert bzw. oxidativ abgebaut wird, und 3 Gew.-% eines unpolaren Polypropylen-Wachses (Licocene PP 1302 der Clariant AG) eingesetzt. Das oxidierte bzw. oxidativ abgebaute Propylen-Ethylen-Copolymer weist eine Hydroxylzahl von 1,2 mg KOH/g und eine Säurezahl von 0,3 mg KOH/g auf. Das Entfernen des Wachses und des Polyolefins erfolgt analog zu Beispiel 1.

### Beispiel 3

Zur Herstellung eines Formteils wird eine Formmasse 94 Gew.-% 316L-Stahlpulver, 3 Gew.-% eines mit Maleinsäureanhydrid gepfropften Ethylen-Propylen-Copolymers (MZ 203 D von Dupont) und 3 Gew.-% eines unpolaren Polypropylen-Wachses (Licocene PP 1302 der Clariant AG) eingesetzt. Das Entfernen des Wachses und des Polyolefins erfolgt ebenso wie in den Beispielen 1 und 2.

## Patentansprüche

1. Formmasse zur Herstellung von Formkörpern mittels eines Pulverspritzgießverfahrens, enthaltend mindestens ein anorganisches Pulver sowie ein Bindersystem, das mindestens ein Polyolefin und weiterhin mindestens ein Wachs enthält, **dadurch gekennzeichnet, dass** mindestens ein Polyolefin polar modifiziert ist, wobei das polar modifizierte Polyolefin ein polar modifiziertes Polypropylen ist.

2. Formmasse gemäß Anspruch 1, **dadurch gekennzeichnet, dass** das mindestens eine Wachs ausgewählt ist aus oxidierten Polyethylenwachsen, mit Maleinsäureanhydrid gepfropften Polyethylen- oder Polypropylenwachsen oder mit (Meth)acrylsäure gepfropften Polyethylen- oder Polypropylenwachsen oder Mischungen daraus.

3. Formmasse gemäß Anspruch 1 oder 2, **dadurch gekennzeichnet, dass** der Anteil an Wachs im Bindersystem im Bereich von 40 bis 90 Gew.-% liegt.

4. Formmasse gemäß Anspruch 3, **dadurch gekennzeichnet, dass** das polar modifizierte Polypropylen mit Maleinsäureanhydrid oder (Meth)acrylsäure gepfropftes Polypropylen oder ein oxidiertes bzw. oxidativ abgebautes Polypropylen ist.

5. Formmasse gemäß einem der Ansprüche 1 bis 4, **dadurch gekennzeichnet, dass** das anorganische Pulver ein Keramikpulver oder ein Metallpulver ist.

6. Formmasse gemäß einem der Ansprüche 1 bis 5, **dadurch gekennzeichnet, dass** der Anteil an anorganischem Pulver im Bereich von 50 bis 70 Vol.-% liegt, der Anteil an polar modifiziertem Polyolefin im Bereich von 10 bis 60 Gew.-% des Binderanteils und der Anteil an Wachs im Bereich von 40 bis 90 Gew.-% des Binderanteils.

7. Verfahren zur Herstellung einer Formmasse nach Anspruch 1, folgende Schritte umfassend:
(a) Schmelzen und Homogenisieren einer Mischung umfassend mindestens ein anorganisches Pulver, mindestens ein Polyolefin und mindestens ein Wachs, wobei mindestens ein Polyolefin polar modifiziert ist,
(b) Formen und Erstarren der Schmelze, wobei das polarmodifizierte Polyolefin ein polarmodifiziertes Polypropylen ist.

8. Verfahren gemäß Anspruch 7, **dadurch gekennzeichnet, dass** das Schmelzen und Homogenisieren in Schritt (a) in einem kontinuierlichen Zweischneckenkneter durchgeführt wird.

9. Verfahren gemäß Anspruch 7 oder 8, **dadurch gekennzeichnet, dass** beim Formen der Schmelze in Schritt (b) ein Granulat hergestellt wird.

10. Verfahren gemäß einem der Ansprüche 7 bis 9, **dadurch gekennzeichnet, dass** in einem ersten Schritt das Polyolefin in einem offenen Scherwalzenkneter oxidiert bzw. oxidativ zu einem polar modifizierten Polyolefin abgebaut wird.

11. Verfahren gemäß Anspruch 10, **dadurch gekennzeichnet, dass** die Aufgabe des Polyolefins auf die Scherwalzen als Schmelzerstrang erfolgt.

12. Verfahren zur Herstellung eines Formteils aus einer Formmasse gemäß einem der Ansprüche 1 bis 6, bei dem die Formmasse zu einem Formkörper geformt wird, aus dem Formkörper das Wachs entfernt wird, wobei ein offenporiger Körper entsteht.

13. Verfahren gemäß Anspruch 12, **dadurch gekennzeichnet, dass** aus dem offenporigen Körper das Polyolefin durch Pyrolyse entfernt wird.

## Claims

1. Moulding composition for the production of mouldings by means of a powder injection-moulding process, comprising at least one inorganic powder and also one binder system which comprises at least one polyolefin and also at least one wax, **characterized in that** at least one polyolefin is polar-modified polyolefin, where the polar-modified polyolefin is a polar-modified polypropylene.

2. Moulding composition according to Claim 1, **characterized in that** the at least one wax is selected from oxidized polyethylene waxes, maleic-anhydride-grafted polyethylene waxes and maleic-anhydride-grafted polypropylene waxes and (meth)acrylic-acid-grafted polyethylene waxes and (meth)acrylic-acid-grafted polypropylene waxes and mixtures thereof.

3. Moulding composition according to Claim 1 or 2, **characterized in that** the wax content in the binder system is in the range from 40 to 90% by weight.

4. Moulding composition according to Claim 3, **characterized in that** the polar-modified polypropylene is maleic-anhydride- or (meth)acrylic-acid-grafted polypropylene or is an oxidized polypropylene or a polypropylene that has been subjected to oxidative degradation.

5. Moulding composition according to any of Claims 1 to 4, **characterized in that** the inorganic powder is a ceramic powder or a metal powder.

6. Moulding composition according to any of Claims 1 to 5, **characterized in that** the inorganic powder content is in the range from 50 to 70% by volume, the polar-modified polyolefin content is in the range from 10 to 60% by weight of the binder content and the wax content is in the range from 40 to 90% by weight of the binder content.

7. Process for the production of a moulding composition according to Claim 1, comprising the following steps:
(a) melting and homogenization of a mixture comprising at least one inorganic powder, at least one polyolefin and at least one wax, where at least one polyolefin is polar-modified polyolefin,
(b) moulding and solidification of the melt, where the polar-modified polyolefin is a polar-modified polypropylene.

8. Process according to Claim 7, **characterized in that** the melting and homogenization in step (a) is carried out in a continuous twin-screw kneader.

9. Process according to Claim 7 or 8, **characterized in that** the moulding of the melt in step (b) produces pellets.

10. Process according to any one of Claims 7 to 9, **characterized in that** in a first step an open shearing-roll kneader is used to obtain a polar-modified polyolefin by oxidizing the polyolefin or subjecting the same to oxidative degradation.

11. Process according to Claim 10, **characterized in that** the polyolefin is applied in the form of melt strand to the shearing rolls.

12. Process for producing a moulding from a moulding composition according to any of Claims 1 to 6, by moulding the moulding composition to give a moulding and removing the wax from the moulding to produce an open-pored product.

13. Process according to Claim 12, **characterized in that** the polyolefin is removed from the open-pored product by pyrolysis.

## Revendications

1. Matière à mouler pour la fabrication de corps moulés par un procédé de moulage par injection de poudre, contenant au moins une poudre inorganique et un système de liant, qui contient au moins une polyoléfine et également au moins une cire, **caractérisée en ce qu'**au moins une polyoléfine est modifiée de manière polaire, la polyoléfine modifiée de manière polaire étant un polypropylène modifié de manière polaire.

2. Matière à mouler selon la revendication 1, **caractérisée en ce que** ladite au moins une cire est choisie parmi les cires de polyéthylène oxydées, les cires de polyéthylène ou de polypropylène greffées avec de l'anhydride d'acide maléique, ou les cires de polyéthylène ou de polypropylène greffées avec de l'acide (méth)acrylique ou leurs mélanges.

3. Matière à mouler selon la revendication 1 ou 2, **caractérisée en ce que** la proportion de cire dans le système de liant se situe dans la plage allant de 40 à 90 % en poids.

4. Matière à mouler selon la revendication 3, **caractérisée en ce que** le polypropylène modifié de manière polaire est un polypropylène greffé avec de l'anhydride de l'acide maléique ou de l'acide (méth)acrylique ou un polypropylène oxydé ou décomposé par oxydation.

5. Matière à mouler selon l'une quelconque des revendications 1 à 4, **caractérisée en ce que** la poudre inorganique est une poudre céramique ou une poudre métallique.

6. Matière à mouler selon l'une quelconque des revendications 1 à 5, **caractérisée en ce que** la proportion de poudre inorganique se situe dans la plage allant de 50 à 70 % en volume, la proportion de polyoléfine modifiée de manière polaire se situe dans la plage allant de 10 à 60 % en poids de la proportion de liant et la proportion de cire se situe dans la plage allant de 40 à 90 % en poids de la proportion de liant.

7. Procédé de fabrication d'une matière à mouler selon la revendication 1, comprenant les étapes suivantes .
(a) la fusion et l'homogénéisation d'un mélange comprenant au moins une poudre inorganique, au moins une polyoléfine et au moins une cire, au moins une polyoléfine étant modifiée de manière polaire,
(b) le façonnage et la solidification de la masse fondue,
la polyoléfine modifiée de manière polaire étant un polypropylène modifié de manière polaire.

8. Procédé selon la revendication 7, **caractérisé en ce que** la fusion et l'homogénéisation à l'étape (a) sont réalisées dans un malaxeur bivis continu.

9. Procédé selon la revendication 7 ou 8, **caractérisé en ce qu'**un granulat est fabriqué lors du façonnage de la masse fondue à l'étape (b).

10. Procédé selon l'une quelconque des revendications 7 à 9, **caractérisé en ce que**, lors d'une première étape, la polyoléfine est oxydée ou décomposée par oxydation en une polyoléfine modifiée de manière polaire dans un malaxeur à cylindres de cisaillement ouvert.

11. Procédé selon la revendication 10, **caractérisé en ce que** l'introduction de la polyoléfine sur les cylindres de cisaillement a lieu sous la forme d'un boudin de masse fondue.

12. Procédé de fabrication d'une pièce moulée à partir d'une matière à mouler selon l'une quelconque des revendications 1 à 6, selon lequel la matière à mouler est façonnée en un corps moulé, la cire est éliminée du corps moulé, un corps à pores ouverts étant obtenu.

13. Procédé selon la revendication 12, **caractérisé en ce que** la polyoléfine est éliminée du corps à pores ouverts par pyrolyse.
